# FASCICULE DE BREVET EUROPEEN

(11) **EP 1 304 880 B1**
(45) Date de publication et mention de la délivrance du brevet: **15.10.2008**
(21) Numéro de dépôt: 02291932.8
(22) Date de dépôt: 31.07.2002
(51) Int. Cl.: H04N 7/173

(54) **Décrochage de la transmission d'un signal de télévision national dans une station locale**
Abhang der Übertragung eines nationalen Fernsehsignals in eine lokale Station
Off-hook transmission of national television signal in a local station

(30) Priorité: 09.10.2001 FR 0113064
(43) Date de publication de la demande: 23.04.2003
(73) Titulaire: TDF, 75015 Paris (FR)
(72) Inventeur: Lebrat, François, 75016 Paris (FR); Meillan, Philippe, 77210 Avon (FR); Bernoux, Jean-Paul, 35700 - Rennes (FR); Lolivier, Germain, 35700 - Rennes (FR)
(74) Mandataire: Cabinet Bloch & Gevers

(56) Documents cités:
- EP-A- 0 856 994
- EP-A- 1 126 706
- WO-A-01/22729
- WO-A-01/35557
- US-A- 6 075 551
- WEISS S M: "SWITCHING FACILITIES IN MPEG-2: NEVASSARY BUT NOT SUFFICIENT" , SMPTE JOURNAL, SMPTE INC. SCARSDALE, N.Y, US, VOL. 104, NR. 12, PAGE(S) 788-802 XP000543847 ISSN: 0036-1682 * page 788, colonne 2 - colonne 3 * * page 798, colonne 2, ligne 31 - ligne 39 * * page 799, colonne 2, ligne 33 - ligne 55 * * page 801, colonne 2, ligne 51 - colonne 3, ligne 6 *
- DAKSS J ET AL: "HYPERLINKED VIDEO" , PROCEEDINGS OF THE SPIE, SPIE, BELLINGHAM, VA, US, VOL. 3528, PAGE(S) 2-10 XP000986761 * alinéa [05.3] *

## Description

La présente invention concerne l'insertion d'un signal local de télévision dans un signal national de télévision afin de transmettre un signal résultant par une station locale notamment dans une région déterminée.

L'article de S. M. WEISS "Switching Facilities in MPEG-2 : Necessary But Not Sufficient", SMPTE JOURNAL, SMPTE INC. SCARDALE, N.Y, US, vol. 104, No. 12, décembre 1995, pages 788-802, présente dans le cadre de signaux vidéo numériques MPEG-2 des problèmes liés à la commutation (switching) et à la combinaison (splicing) de segments de programme tels que des publicités dans un programme. En particulier, des insertions de publicités dans une fenêtre temporelle d'un programme de télévision peuvent engendrer un retard du programme. Le retard est alors maintenu jusqu'à ce qu'il soit supprimé, par exemple en écourtant le programme ou coupant d'autres publicités. Cet article considère seulement l'insertion de publicités dans un programme et non pas le remplacement d'une partie de programme par des publicités. Aucune solution n'est en outre proposée sur la manière de retransmettre le programme après l'insertion de publicités dans celui-ci.

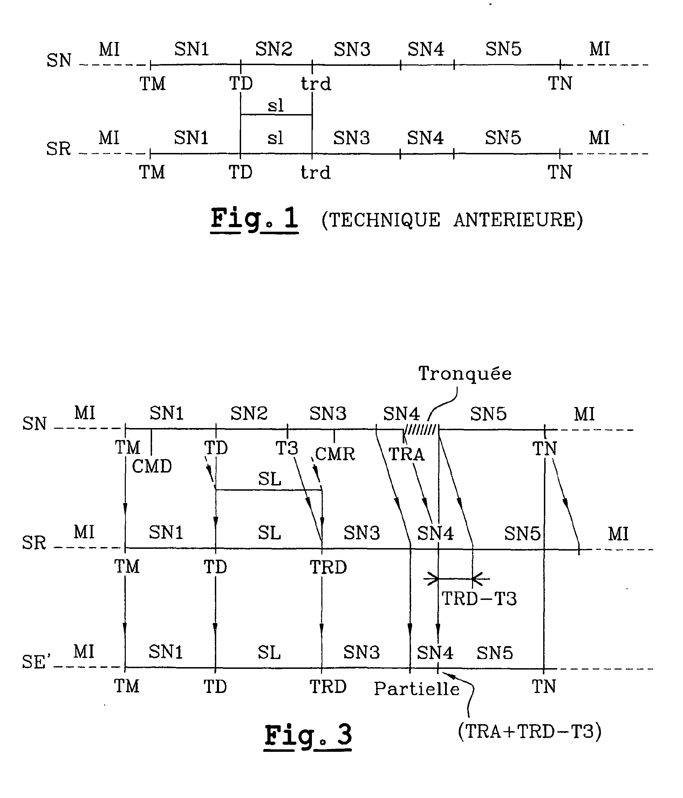

Comme montré à une première ligne dans la figure 1, un signal de télévision national SN est par exemple composé de plusieurs portions SN1 à SN5 chacune composée d'au moins un programme télévisé. Le signal SN est émis en continu entre un instant de début de matinée TM succédant à une mire MI et à un instant de fin de soirée dans la nuit TN précédant l'émission de la mire MI.

Actuellement pour introduire un signal de programme local sl à la place d'une portion SN2 du signal national, le signal local sl doit avoir exactement la durée Trd-TD de la portion de signal national SN2 à remplacer, comme montré dans le signal résultant SR à la troisième ligne de la figure 1, émis par une station d'émission et de réception locale. En particulier, la fin de l'émission du signal local doit correspondre exactement au début trd de la portion suivante de signal national SN3.

La durée trd-TD du décrochage du signal national effectué par la station locale est fixe, ce qui contraint le conducteur local du décrochage dans la station locale à prévoir un programme local non seulement ayant exactement la durée trd-TD de la portion du signal national SN2 à supprimer, mais également devant se terminer exactement à l'instant de raccrochage trd au signal national SN.

L'imposition des paramètres temporels à l'identique entre la portion de signal national SN2 à supprimer et la portion de signal local sl à introduire dans le signal national SN ne permet pas par exemple d'introduire des reportages locaux en direct dont la durée est difficilement maîtrisable et plus longue que la durée trd-TD de la portion SN2 à remplacer.

La présente invention vise à remédier à cet inconvénient afin que la durée du décrochage local et par conséquent le raccrochage local au signal national soient indépendants de la durée d'une portion du signal national à remplacer.

A cette fin, un procédé pour transmettre d'abord un premier signal de télévision reçu jusqu'à un premier instant prédéterminé, puis transmettre un deuxième signal de télévision entre le premier instant et un deuxième instant prédéterminé, et enfin transmettre le premier signal depuis le deuxième instant, est tel que caractérisé dans la revendication 1.

Grâce à l'invention, la durée du deuxième signal de télévision offre la possibilité d'introduire un signal de programme local dont la durée est supérieure à la portion du premier signal de télévision à remplacer, par exemple pour diffuser une intervention en direct dont la durée ne peut pas être maîtrisée avec précision, ou pour insérer dans un écran de publicité nationale une ou plusieurs publicités locales. L'invention libère ainsi les contraintes d'instant de raccrochage local au signal national dans une station locale d'émission et de réception de signal de télévision.

L'invention concerne également une station de réception et de transmission pour la mise en oeuvre du procédé selon l'invention, comprenant un moyen pour recevoir un premier signal de télévision, un commutateur pour substituer un deuxième signal de télévision à une portion du premier signal de télévision, et un moyen pour fournir le deuxième signal au commutateur depuis un premier instant prédéterminé jusqu'à un deuxième instant prédéterminé. La station est telle que caractérisée dans la revendication 5 ce qui permet de réaliser un raccrochage automatique au premier signal enregistré à la fin de la transmission du signal local.

L'invention prévoit également si nécessaire, particulièrement pour un canal d'émission de signal de télévision national diffusant en continu 24 heures sur 24 heures, un raccrochage automatique au premier signal reçu de manière à retransmettre directement le signal national par la station locale après la transmission du signal local. Dans ce but, la station comprend un moyen pour détecter dans le premier signal reçu une commande spécifiant un instant de raccrochage afin de commander l'arrêt de la transmission du premier signal enregistré à l'instant du raccrochage spécifié et la transmission du premier signal directement reçu à l'instant de raccrochage additionné de la différence du deuxième instant et du troisième instant.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un diagramme temporel montrant un décrochage local de signal de télévision selon la technique antérieure, déjà commenté ;
- la figure 2 est un bloc-diagramme schématique d'une station de réception et d'émission locale selon l'invention ; et
- la figure 3 est un diagramme temporel montrant diverses portions de signaux traitées dans la station pour réaliser un décrochage local selon l'invention.

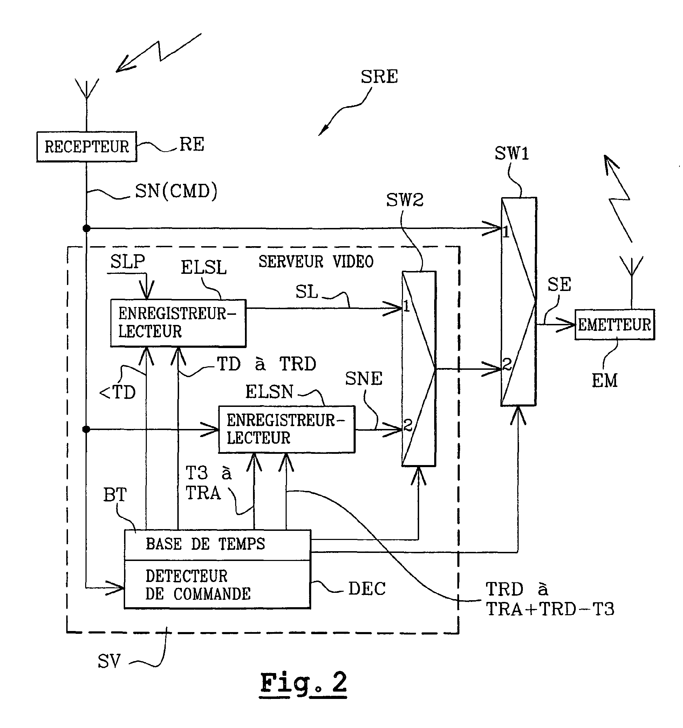

Comme montré à la figure 2, une station locale de réception et d'émission de signal de télévision SRE comprend notamment pour la mise en oeuvre de l'invention un récepteur RE, un premier commutateur vidéo SW1 à deux entrées, un serveur vidéo SV relié à la sortie du récepteur RE, et un émetteur EM relié à la sortie du commutateur SW1.
Dans la suite, il sera supposé que les signaux de télévision reçus et traités par la station locale SRE sont des signaux de télévision numériques selon les normes DVB (Digital Video Broadcasting) et MPEG-2 (Moving Picture Expert Group) comprenant des paquets élémentaires relatifs à des composantes audio, vidéo et de données d'au moins un service de télévision numérique (canal de télévision) et d'autres paquets élémentaires relatifs à une voie de service supportant notamment des tables de signalisation et d'information sur le service. Le récepteur RE reçoit des paquets de transport issus du découpage de paquets élémentaires de longueurs variables relatifs à plusieurs canaux de télévision multiplexés. Le récepteur RE démodule le signal multiplexe reçu, puis le dépaquetise, et enfin le décompose en des paquets élémentaires seulement assignés à l'un prédéterminé des canaux de télévision. Dans la suite, ce canal prédéterminé est appelé signal de télévision national SN.

Comme montré dans une première ligne à la figure 3, le signal de télévision national SN est supposé être composé d'une première portion SN1 dont l'émission commence en début de matinée TM après celle d'une mire MI jusqu'à un premier instant prédéterminé TD, puis d'une deuxième portion SN2 jusqu'à un instant prédéterminé T3, avec T3>TD, puis trois portions successives SN3, SN4 et SN5 auxquelles la mire MI succède à un instant en fin de soirée TN. Chacune des portions SN1 à SN5 peut être composée d'un ou plusieurs magazines télévisuels nationaux.

Un signal de télévision local SL représenté à une deuxième ligne dans la figure 3 doit être émis par la station locale SRE à partir de l'instant TD déterminant la fin de la première portion SN1 du signal national et doit remplacer la portion SN2 du signal national dont la durée T3-TD est inférieure à la durée TRD-TD de la durée du signal local SL, comme montré par la composition du signal résultant SE produit par le commutateur SW1 à la troisième ligne de la figure 3. Par exemple l'instant de décrochage TD correspond au début ou à un instant prédéterminé du journal de télévision national capté par le récepteur RE et le signal local SL correspond à des informations d'une région dans laquelle l'émetteur EM de la station locale SRE rayonne.
Le signal national SN sous forme de paquets élémentaires est appliqué par la sortie du récepteur RE à une première entrée du premier commutateur vidéo SW1 et à l'entrée du serveur SV. La première entrée et la sortie du commutateur SW1 sont reliées lorsque la première portion SN1 du signal national est retransmise afin qu'elle soit émise jusqu'à l'instant de décrochage TD. Pendant le reste de la journée à partir de l'instant de décrochage TD, jusqu'à un éventuel instant de raccrochage effectif TRA+TRD-T3, la sortie du commutateur SW1 est reliée à la deuxième entrée de celui-ci qui est connectée à la sortie du serveur vidéo SV.

Fonctionnellement, le serveur vidéo SV comprend principalement un enregistreur-lecteur ELSL pour enregistrer et lire le signal local SL, un enregistreur lecteur ELSN pour enregistrer et lire le signal national SN à partir du début de la portion SN3, c'est-à-dire à partir du troisième instant T3, un deuxième commutateur vidéo SW2 ayant deux entrées respectivement reliées aux sorties des enregistreurs ELSL et ELSN et une sortie reliée à la deuxième entrée du premier commutateur SW1, et un détecteur de commande de décrochage/raccrochage DEC lié à une base de temps BT qui détermine des instants d'enregistrement et de lecture respectivement dans les enregistreurs ELSL et ELSN et des ouvertures/fermetures des entrées des commutateurs SW1 et SW2.
Les commutateurs vidéo SW1 et SW2 multiplexent temporellement des signaux vidéo numériques, notamment au niveau de leurs voies de service afin que le signal sortant d'un commutateur offre un flux continu.

Les premier et troisième instants TD et T3 bornant l'intervalle temporel de la portion SN2 au cours duquel la portion SN2 du signal national SN est à supprimer sont spécifiés par une commande CMD contenue dans le signal national et reçue antérieurement à l'instant de décrochage TD, ou à tout le moins au plus tard à l'instant de décrochage, afin de commander la transmission de signal local SL au premier instant TD et l'enregistrement du signal national SN reçu à partir de l'instant T3.
Par exemple, des commandes CMD sont insérées dans des paquets identifiés par des octets d'identification PID (Packet Identifier) dans l'entête de paquets élémentaires prédéterminés du signal national SN que la base de temps BT détecte.
Selon une autre variante, les commandes CMD sont insérées par l'émetteur de signal national sous la forme de données horaires spécifiques dans la voie de service du signal national SN antérieurement au premier instant TD. L'émetteur liste les identificateurs PID des différentes composantes à supprimer temporairement du signal national, et les identificateurs PID correspondent précisément aux instants de décrochage TD et T3 du signal national entres lesquels le signal local est au moins en partie inséré. Pour chaque commande de commutation du signal national au signal local et inversement, l'émetteur de signal national met à jour les tables de signalisation dans la voie de service selon la norme MPEG-2, notamment la table de description de programme PMT (Program Map Table), et recalcule divers paramètres qui permettent aux serveurs SV dans des stations locales SRE de commuter proprement à des instants de décrochage et raccrochage TD et TRD notamment.

En réponse à une commande CMD contenue dans la portion de signal national SN1 de préférence reçue antérieurement à l'instant TD et détectée dans le signal reçu SN par le détecteur DEC, la base de temps BT se prépare à la substitution temporaire du signal local SL au signal national SN à partir de l'instant TD. Ainsi, à partir des instants TD et T3 spécifiés dans la commande détectée CMD, la base de temps fournie divers signaux d'horloge pour commander les enregistreurs ELSL et ELSN et les commutateurs SW1 et SW2.
A l'instant de décrochage TD, la base de temps BT produit un signal d'adresse d'entrée au commutateur SW1 pour que la sortie du commutateur SW1 ne soit plus reliée à la première entrée, mais à la deuxième entrée connectée à la sortie du commutateur SW2, un signal d'adresse d'entrée au commutateur SW2 pour relier la sortie du premier enregistreur ELSL à la première entrée du commutateur SW1, et un signal de lecture au premier enregistreur lecteur ELSL afin que celui-ci transmette le signal SL vers l'émetteur EM à travers les commutateurs SW2 et SW1. Le signal local SL à transmettre pendant la fenêtre d'émission entre l'instant de décrochage TD et l'instant de raccrochage TRD, avec TRD>T3, peut être un signal local SLP entièrement pré-enregistré dans l'enregistreur lecteur ELSL, ou bien être en cours d'enregistrement à partir d'un instant antérieur à l'instant de décrochage TD, comme indiqué par des traits inclinés en pointillés à la deuxième ligne de la figure 3. Selon cette dernière variante, l'enregistrement du signal local SL précédant sensiblement l'instant de décrochage TD correspond par exemple à un reportage local en direct. Le signal local SL est ainsi au moins partiellement enregistré antérieurement à l'instant de décrochage TD en un signal local enregistré qui est ensuite lu et transmis à partir de l'instant de décrochage TD.
A l'instant T3 compris entre les instants TD et TRD, la base de temps BT commande l'enregistrement du signal national SN dans le deuxième enregistreur lecteur ELSN à partir du début de la portion de signal national SN3.
A l'instant de raccrochage TRD déterminé localement à partir de la durée du signal local SL à émettre depuis l'instant de décrochage TD par le conducteur de la station locale SRE, la base de temps BT commande l'arrêt de la lecture du signal local SL dans le premier enregistreur ELSL, la lecture différée du signal national SN qui a été enregistré depuis le troisième instant T3, et la commutation de la première entrée vers la deuxième entrée du commutateur SW2 afin d'appliquer le signal national enregistré SNE à l'émetteur EM à travers la deuxième entrée du commutateur SW1 et ainsi émettre le reste SN3, SN4, SN5, MI du signal national.
Selon une variante plus simple, au lieu de détecter une commande CMD des bornes TD et T3 de l'intervalle de la portion SN2 du signal national à supprimer, des boutons-poussoirs sont prévus dans la base de temps BT pour commander manuellement la substitution du signal local SL à la portion de signal national à supprimer.
Grâce à l'invention, les contraintes horaires sont allégées sur les reportages en direct locaux dont la durée est indépendante de la durée du journal de télévision national ou d'une portion SN2 de celui-ci. Selon un autre exemple, le signal local SL est composé d'un ou de plusieurs spots publicitaires locaux qui sont substitués à un ou plusieurs spots publicitaires nationaux SN2 dont la durée T3-TD n'est pas contraignante sur la durée TRD-TD des spots publicitaires locaux. Le conducteur de décrochage publicitaire local édite ainsi en toute indépendance les spots publicitaires locaux.

Pour un signal de télévision national ne diffusant pas de programme de télévision la nuit entre les instants TN et TM, le rattrapage local du décalage temporel TRD-T3 entre le signal national d'origine SN et le signal émis localement SE s'effectue naturellement la nuit.
En variante, lorsque le signal national SN est diffusé en continu 24 heures sur 24 heures, sans interruption, l'invention prévoit de tronquer une ou plusieurs portions du signal national SN par exemple des spots publicitaires destinés à une région prédéterminée, ou des diffusions de peu d'intérêt diffusées la nuit, en resynchronisant en une ou plusieurs fois successives le signal émis SE avec le signal national SN.
Comme montré à la figure 3, un instant de rattrapage TRA est engendré par la base de temps BT en réponse à une commande prédéterminée CMR spécifiant l'instant TRA. La commande de raccrochage est émise par l'émetteur de signal national de préférence antérieurement à l'instant TRA et détectée dans une table prédéterminée de la voie de service du signal national SN. A l'instant TRA, par exemple dans la portion SN4 du signal national reçu, la base de temps BT arrête l'enregistrement du signal national reçu dans le deuxième enregistreur ELSN. Puis à l'instant TRA+TRD-T3, la base de temps BT arrête la lecture du signal SNE dans l'enregistreur ELSN et commute la deuxième entrée du premier commutateur SW1 vers la première entrée de celui-ci qui est alors reliée à l'entrée de l'émetteur EM afin de transmettre directement le signal national reçu SN, comme le montre le signal SE' sortant du commutateur SW1 à une quatrième ligne de la figure 3. Le signal émis SE' à partir de l'instant TRA+TRD-T3 est alors synchrone avec le signal reçu SN, à la durée de traversée du signal national dans la station SRE près. Le segment hachuré de longueur TRD-T3 à la fin de la portion SN4 est ainsi tronqué selon l'exemple montré à la figure 3, seulement le début de la portion SN4 étant contenu dans le signal émis SE'.
En variante, comme pour le décrochage, l'instant de raccrochage TRA+TRD-T3 peut être décidé localement par le conducteur des émissions locales en appuyant sur un bouton-poussoir adéquat dans la base de temps BT.

L'invention n'est pas limitée à la télévision numérique, mais est également applicable à des signaux de télévision analogiques reçus par le récepteur RE et émis par l'émetteur EM, grâce à un convertisseur analogique-numérique en entrée de la station SRE et un convertisseur numérique-analogique en sortie de la station. Les signaux de télévision traités dans la station selon l'invention peuvent être non seulement des signaux de télévision hertzienne terrestre, mais aussi des signaux de télévision transmis par câble ou satellite.

## Revendications

1. Procédé pour transmettre d'abord un premier signal de télévision (SN) reçu jusqu'à un premier instant prédéterminé (TD), puis transmettre un deuxième signal de télévision (SL) entre le premier instant (TD) et un deuxième instant prédéterminé (TRD), et enfin transmettre le premier signal depuis le deuxième instant, **caractérisé en ce que** le premier signal reçu est enregistré depuis un troisième instant (T3) postérieur au premier instant (TD) et antérieur au deuxième instant (TRD), et le premier signal enregistré (SNE) est transmis à partir du deuxième instant (TRD), et le premier signal (SN) contient une commande (CMD) qui spécifie les premier et troisième instants (TD, T3) de l'intervalle temporel au cours duquel une portion (SN2) du premier signal est supprimée pour commander la transmission du deuxième signal (SL) au premier instant (TD) et l'enregistrement du premier signal reçu à partir du troisième instant (T3).

2. Procédé conforme à la revendication 1, selon lequel le deuxième signal (SL) est au moins partiellement enregistré (SLP) antérieurement au premier instant (TD), et le deuxième signal enregistré (SL) est transmis à partir du premier instant (TD).

3. Procédé conforme à la revendication 1 ou 2, selon lequel la commande (CMD) est reçue antérieurement au premier instant (TD).

4. Procédé conforme à l'une quelconque des revendications 1 à 43, selon lequel le premier signal (SN) contient une commande (CMR) spécifiant un instant de raccrochage (TRA) afin qu'à un instant succédant à l'instant de raccrochage additionné de la différence entre le deuxième instant (TRD) et le troisième instant (T3), la transmission du premier signal enregistré (SNE) soit arrêtée et remplacée par la transmission du premier signal reçu directement (SN, SE').

5. Station de réception et de transmission (SRE) comprenant un moyen (RE) pour recevoir un premier signal de télévision (SN), un commutateur (SW1) pour substituer un deuxième signal de télévision (SL) à une portion (SN2) du premier signal de télévision, et un moyen (ELSL) pour fournir le deuxième signal (SL) au commutateur depuis un premier instant prédéterminé (TD) jusqu'à un deuxième instant prédéterminé (TRD), **caractérisée en ce qu'**elle comprend un moyen (ELSN) pour enregistrer le premier signal (SN1) depuis un troisième instant prédéterminé (T3) postérieur au premier instant (TD) et antérieur au deuxième instant (TRD), et un moyen (SW2) pour appliquer le deuxième signal (SL) entre les premier et deuxième instants (TD, TRD) et le premier signal enregistré (SNE) depuis le troisième instant (T3) au commutateur (SW1) afin de transmettre dès le deuxième instant (TRD) le premier signal enregistré, et un moyen (DEC, BT) pour détecter dans le premier signal (SN) une commande (CMD) spécifiant les premier et troisième instants (TD, T3) afin de commander la substitution du deuxième signal (SL) au premier signal (SN1) dans le commutateur (SW1) au premier instant spécifié (TD), puis l'enregistrement du premier signal reçu dans le moyen pour enregistrer (ELSN) à partir du troisième instant (T3).

6. Station conforme à la revendication 5 comprenant un moyen (BT) pour détecter dans le premier signal reçu (SN) une commande (CMR) spécifiant un instant de raccrochage (TRA) afin de commander l'arrêt de la transmission du premier signal enregistré (SNE) à l'instant de raccrochage spécifié et la transmission (SE') du premier signal directement reçu (SN) à l'instant de raccrochage (TRA) additionné de la différence du deuxième instant (TRD) et du troisième instant (T3).

## Claims

1. Process for transmitting, first of all, a first television signal (SN) received up to a first predetermined moment (TD), then transmitting a second television signal (SL) between the first moment (TD) and a predetermined second moment (TRD), and finally transmitting the first signal from the second moment, **characterised in that** the first signal received is recorded from a third moment (T3) subsequent to the first moment (TD) and prior to the second moment (TRD), and the first recorded signal (SNE) is transmitted from the second moment (TRD), and the first signal (SN) contains a command (CMD) which specifies the first and third moments (TD, T3) of the time interval in the course of which a part (SN2) of the first signal is suppressed in order to control the transmission of the second signal (SL) at the first moment (TD) and the recording of the first signal received starting from the third moment (T3).

2. Process according to claim 1, wherein the second signal (SL) is at least partially recorded (SLP) prior to the first moment (TD), and the second signal recorded (SL) is transmitted starting from the first moment (TD).

3. Process according to claim 1 or 2, wherein the command (CMD) is received prior to the first moment (TD).

4. Process according to any one of claims 1 to 3, wherein the first signal (SN) contains a command (CMR) specifying a moment of connection (TRA) so that at a moment following the moment of connection added to the difference between the second moment (TRD) and the third moment (T3), the transmission of the first signal recorded (SNE) is stopped and replaced by the transmission of the first signal received directly (SN, SE').

5. Receiving and transmitting station (SRE) comprising means (RE) for receiving a first television signal (SN), a switch (SW1) for substituting a second television signal (SL) for a part (SN2) of the first television signal, and means (ELSL) for supplying the second signal (SL) to the switch from a first predetermined moment (TD) to a second predetermined moment (TRD), **characterised in that** it comprises means (ELSN) for recording the first signal (SN1) from a third predetermined moment (T3) subsequent to the first moment (TD) and prior to the second moment (TRD), and means (SW2) for applying the second signal (SL) between the first and second moments (TD, TRD) and the first signal recorded (SNE) from the third moment (T3) to the switch (SW1) in order to transmit the first signal recorded immediately after the second moment (TRD), and means (DEC, BT) for detecting, in the first signal (SN) a command (CMD) specifying the first and third moments (TD, T3) so as to control the substitution of the second signal (SL) for the first signal (SN1) in the switch (SW1) at the first moment specified (TD), then the recording of the first signal received in the means for recording (ELSN) starting from the third moment (T3).

6. Station according to claim 5, comprising means (BT) for detecting, in the first signal received (SN), a command (CMR) specifying a moment of connection (TRA) in order to control the stoppage of transmission of the first signal recorded (SNE) at the moment of connection specified and the transmission (SE') of the first signal received directly (SN) at the moment of connection (TRA) added to the different between the second moment (TRD) and the third moment (T3).

## Patentansprüche

1. Verfahren, um zunächst ein bis zu einem vordefinierten Zeitpunkt (TD) empfangenes erstes Fernsehsignal (SN) zu übertragen, dann ein zweites Fernsehsignal (SL) zwischen dem ersten Zeitpunkt (TD) und einen vordefinierten zweiten Zeitpunkt (TRD) zu übertragen und schließlich ab dem zweiten Zeitpunkt das erste Signal zu übertragen, **dadurch gekennzeichnet, dass** das empfangene erste Signal ab einem dritten Zeitpunkt (T3), der zeitlich hinter dem ersten Zeitpunkt (TD) und vor dem zweiten Zeitpunkt (TRD) liegt, aufgezeichnet wird, dass das aufgezeichnete erste Signal (SNE) ab dem zweiten Zeitpunkt (TRD) übertragen wird und dass das erste Signal (SN) einen Befehl (CMD) enthält, der den ersten und dritten Zeitpunkt (TD, T3) des Zeitintervalls, während dessen ein Abschnitt (SN2) des ersten Signals unterdrückt wird, vorgibt und dazu dient, die Übertragung des zweiten Signals (SL) zum ersten Zeitpunkt (TD) und die Aufzeichnung des empfangenen ersten Signals ab dem dritten Zeitpunkt (T3) in Gang zu setzen.

2. Verfahren nach Anspruch 1, nach dem das zweite Signal (SL) zumindest teilweise vor dem ersten Zeitpunkt (TD) aufgezeichnet wird (SLP) und das aufgezeichnete zweite Signal (SL) ab dem ersten Zeitpunkt (TD) übertragen wird.

3. Verfahren nach Anspruch 1 oder 2, nach dem der Befehl (CMD) vor dem ersten Zeitpunkt (TD) empfangen wird.

4. Verfahren nach einem beliebigen der Ansprüche 1 bis 3, nach dem das erste Signal (SN) einen Befehl (CMR) enthält, der einen Wiedereinklinkzeitpunkt (TRA) vorgibt, damit die Übertragung des aufgezeichneten ersten Signals (SNE) zu einem Zeitpunkt nach dem Wiedereinklinkzeitpunkt plus der Differenz zwischen dem zweiten Zeitpunkt (TRD) und dem dritten Zeitpunkt (T3) gestoppt und durch die Übertragung des direkt empfangenen ersten Signals (SN, SE') ersetzt wird.

5. Empfangs- und Sendestation (SRE), die ein Mittel (RE) zum Empfangen eines ersten Fernsehsignals (SN), einen Umschalter (SW1) zum Ersetzen eines Abschnitts (SN2) des ersten Fernsehsignals durch ein zweites Fernsehsignal (SL) und ein Mittel (ELSL) zum Übermitteln des zweiten Signals (SL) ab einem vordefinierten ersten Zeitpunkt (TD) bis zu einem vordefinierten zweiten Zeitpunkt (TRD) an den Umschalter umfasst, **dadurch gekennzeichnet, dass** sie Folgendes umfasst: ein Mittel (ELSN) zum Aufzeichnen des ersten Signals (SN1) ab einem vordefinierten dritten Zeitpunkt (T3), der zeitlich hinter dem ersten Zeitpunkt (TD) und vor dem zweiten Zeitpunkt (TRD) liegt, und ein Mittel (SW2) zum Anlegen des zweiten Signals (SL) zwischen dem ersten und zweiten Zeitpunkt (TD, TRD) sowie des aufgezeichneten ersten Signals (SNE) ab dem dritten Zeitpunkt (T3) an den Umschalter (SW1) zwecks Übertragung des aufgezeichneten ersten Signals unmittelbar ab dem zweiten Zeitpunkt (TRD) und ein Mittel (DEC, BT) zur Erfassung - aus dem ersten Signal (SN) - eines den ersten und dritten Zeitpunkt (TD, T3) vorgebenden Befehls (CMD), um den Austausch - im Umschalter (SW1) - des ersten Signals (SN1) durch das zweite Signal (SL) zum vorgegebenen ersten Zeitpunkt (TD) und dann die Aufzeichnung des empfangenen ersten Signals auf dem Mittel zum Aufzeichnen (ELSN) ab dem dritten Zeitpunkt (T3) in Gang zu setzen.

6. Station nach Anspruch 5, die Folgendes umfasst : ein Mittel (BT) zur Erfassung - aus einem empfangenen ersten Signal (SN) - eines einen Wiedereinklinkzeitpunkt (TRA) vorgebenden Befehls (CMR), der dazu dient, die Übertragung des aufgezeichneten ersten Signals (SNE) zum vorgegebenen Wiedereinklinkzeitpunkt zu stoppen und die Übertragung (SE') des direkt empfangenen ersten Signals (SN) zum Wiedereinklinkzeitpunkt (TRA) plus der Differenz zwischen dem zweiten Zeitpunkt (TRD) und dem dritten Zeitpunkt (T3) in Gang zu setzen.
